# EUROPEAN PATENT SPECIFICATION

(11) **EP 0 750 420 B1**
(45) Date of publication and mention of the grant of the patent: **05.12.2001**
(21) Application number: 96830477.4
(22) Date of filing: 24.09.1996
(51) Int. Cl.: H04N 5/44

(54) **TV pictures vision control system through generation by means of a remote-control of signals for instantaneous blanking or blurring of the video signal, while leaving the audio signal active**
System zum Überwachen der Darstellung von Fernsehbildern durch die Erzeugung, mit Hilfe der Fernsteuereinrichtung, von Signalen zum Ausblenden oder zum Verzerren des Videosignals, während das Audiosignal activ bleibt
Système de supervision de la visualisation d'images de télévision par la génération, au moyen de la télécommande, de signaux pour la suppression ou la perturbation du signal vidéo, en laissant le signal audio actif

(30) Priority: 27.09.1995 IT RM950639
(43) Date of publication of application: 27.12.1996
(73) Proprietor: Samarughi, Mario, 00135 Roma (IT)
(72) Inventor: Samarughi, Mario, 00135 Roma (IT)
(74) Representative: Dini, Roberto, Dr. Ing.

(56) References cited:
- DE-U- 9 205 599
- US-A- 4 417 278
- US-A- 4 520 404
- US-A- 4 716 469
- US-A- 5 195 135

## Description

The present invention relates to a television pictures vision control system, through generation by means of a remote-control of signals for the instantaneous blanking and/or blurring of the video signal, while leaving the audio signal active.

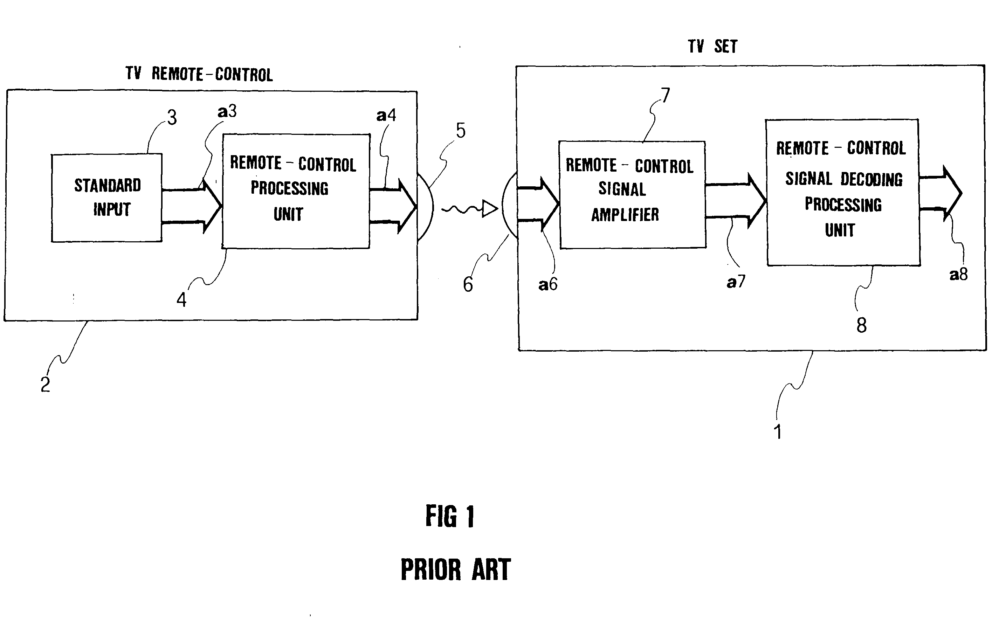

Figure 1 shows a block diagram of a prior art system for controlling the vision of TV pictures. A TV set 1 and a TV remote-control 2 are provided, remotely connected therebetween by means of infrared signals, for example. The remote-control 2 comprises "standard" input means 3 for receiving input standard controls to control standard signals a3 controlling various functions and TV facilities. Said standard input means 3 usually comprise remote-control keys and a matrix enabling structure, wherein the actuation of each remote-control key short-circuits one of the crossings of this matrix. In this way the standard signals a3, whose frequency or digital code serves to control the TV set, are controlled. Particularly, under "standard" signals are meant those signals provided by commercially available TV sets, i.e. for the volume, brightness, contrast and colour saturation adjustment, for finding programs and/or TV stations, for switching on and off the TV set, for "muting" the sound, etc. The remote-control 2 further comprises a remote-control processing unit 4 for receiving input standard signals a3 controlled by standard input means 3, as well as a transmission transducer 5. Said transducer 5 receives as input the signals a4 coming from the remote-control processing unit 4 and outputs them to the TV set 1. The TV set 1 comprises in turn a receiving transducer 6 for receiving as input signals coming from the transmission transducer 5. A remote-control signal-amplifying circuit 7 is also provided, for receiving as input signals a6 coming from the receiving transducer 6. Furthermore, the numeral 8 indicates a signal-decoding processing unit for receiving as input the signals a7 coming from the remote-control signal-amplifying circuit 7, for processing and routing them inside the TV set 1 according to their functions. The processing unit 8 is equipped with a plurality of standard outputs a8. Said outputs can be activated in accordance with standard signals a3 emitted by the standard signal input means 3 above described. The TV set 1 further comprises a luminance/chrominance circuit not shown in the figure. Said element is mentioned at this time as it will be useful in the course of the text to the implementation of the present invention.

The prior art embodiment described up to now does not take into consideration a typical problem, strongly felt at present, i.e. the constant presence of pictures whose violent or undesired contents result to be not appreciated by users, children in particular, which are often unconscious viewers of scenes not suitable and dangerous to them.

The need for permitting the instantaneous blanking of the undesired video signal arises, while leaving the sound signal active, the listening of which can be helpful to the subsequent restoring of the video function, as well as for other purposes later described.

The best way to satisfy such need is to provide a first supplementary remote-control key, whose actuation allows the instantaneous blanking of the video signal only, and consequently of the light emission by the CRT, for a time interval desired by users (and, in case, programmed by them), in a way wholly similar to the "mute" key for turning off the sound, which allows the instantaneous suppression of the audio signal. The video screen appears then as the TV set were switched off. Currently, such a function of video blanking is sometimes provided in two different modes, each having some disadvantages: in the first one, a prolonged actuation of the brightness and/or contrast keys is necessary until obtaining the desired result, but this procedure takes quite a long time (often precious in these cases) to avoid vision of the undesired scene, as the action of the video blanking results gradual and not instantaneous; in the second mode, the so-called "videotext" mode, a mode with which few TV sets are equipped by the way, users are compelled not only to view undesired text lines but also the light emission by the CRT, always present. Moreover, the key for activating the videotext function is generally different from the one for deactivating it. The video signal blanking function then cannot be implemented obviously either by changing channel or by switching off the TV set as in this case users could not identify at the right time the moment in which the usual vision could be restored and should inevitably renounce to follow the program.

Furthermore, an alternative need, in case additional, is to provide a further remote-control supplementary key, whose function is to blur instantaneously the video signal of the TV station selected in that moment, for a time interval desired by users and to their liking, in this case too leaving the audio signal active. The picture will be in this case only "guessed" and intelligible to adult viewers only. The same picture, by loosing clearness or definition, will not consequently allow unpleasant and delicate particulars to be received especially by minors.

The above mentioned blurring can be useful when the video signal is decisive for adult viewers to understand the program followed by them and containing pictures not suitable to minors.

The present invention meets said requirements by providing A TV pictures vision control system as set out in the appended claims.

The present invention firstly aims at providing that, while the TV set switched on, the picture and the light emission by the CRT produced by the TV set are instantaneously suppressed to allow users, desiring not to view or make viewing the transmitted pictures, to make use of the audio signal only and thus to continue following the desired program, without being compelled to change seat or to turn their back to the TV set in order not to be disturbed by the picture or the light, and also without being compelled to switch off the TV set or to change channel. In this way, pictures or scenes which could reveal to be crude, obscene, immoral and violent are wholly eliminated or made harmless. This is obtained by actuating the first supplementary key of the remote-control one time only. The subsequent restoring of the video signal is obtained too by actuating one time only the same supplementary key which has caused the instantaneous blanking. Same considerations are to be applied for the blurring.

As far as the function of video signal instantaneous blanking is concerned, it could further aim at making the users' eyes have a rest and allowing them continuing to follow however the desired program (i.e. political and cultural talk-shows wherein the picture is not important), even if limitedly to the audio signal only, by remaining seated in front of the TV set without any viewing disturb. Similarly to what already happens with the instantaneous turning off of the sound, with the instantaneous video blanking users will be no longer compelled to receive the program wholly, as they will be able to defend themselves at the right time from unpleasant pictures.

A further purpose, similar to the one previously described, is to allow users more to concentrate on the audio component of a particular program only, a musical piece for example or programs wherein the TV message is given both in audio and video mode at the same time, by disturbing the understanding and consequently compelling users to eliminate one of the two functions, audio or video, as they like. For example, the display on the screen of a written sheet which is also read by the speaker.

The originality of the present system in summary mainly consists in the possibility of using the TV set in one only of its two primary functions, audio-video, and more precisely in the audio function only, by means of a special supplementary key placed on the remote-control for the above mentioned specific function only, i.e. for instantaneously blanking the video signal of a TV transmission by making the screen appear as the TV set were switched off; this key, not available up to now, is similar to the key which has been existing instead for few decades having the specific function of turning immediately off the sound signal of a TV transmission and making possible to use the TV set in its video function only. With all the resulting advantages, some of them here mentioned, based on the fact that users are put in a position to control instantaneously the TV programs in both primary functions and not only in the audio function.

The present invention will be herebelow described by embodiments thereof illustrated by way of example and not for limitative purposes. In particular, both the function of instantaneous video blanking and the function of instantaneous video blurring will be considered always present. It is however understood that embodiments of the present invention providing even only one of said functions will be possible, with obvious changes to what is later described. From now on the accompanying figures will be referred to, wherein:
Fig. 1, previously described, provides a block diagram of a prior art embodiment;
Fig. 2, shows a block diagram of the embodiment according to present invention;
Figs. 3A and 3B show flow charts of an example of programming of the signal decoding processing unit 8;
Figs. 4A and 4B show examples of embodiments of video blanking and video blurring means according to present invention;
Fig. 4C shows an example of embodiment of a buffer circuit in case the TV set is equipped with a SCART connector;
Figs. 5A to 5C show partial circuit diagrams of a commercial TV set as modified according to the present invention; and
Fig. 6 shows an additional embodiment of video signal instantaneous blurring means.

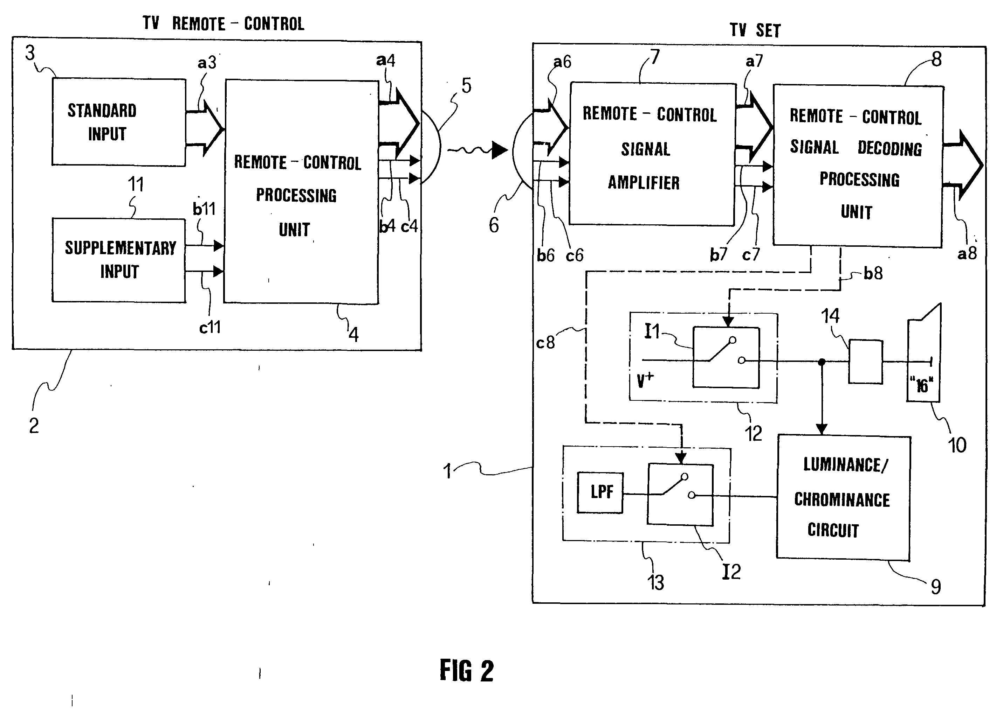

Referring now to Fig. 2, a block diagram of the system according to present invention and its differences compared to the prior art embodiment described in the preceding Fig. 1 are shown. Fig. 2 first of all shows, inside the remote-control 2, supplementary input means 11 for receiving as input supplementary controls for the instantaneous blanking and/or blurring of the TV program video signal and for controlling first and second supplementary signals b11, c11 for the above mentioned TV signal instantaneous video blanking and instantaneous video blurring, respectively. The remote-control processing unit 4, the transmission and receiving transducers 5,6, the remote-control signal amplifier 7 and the signal-decoding processing unit 8 will be also sensitive to the activation of said first and second supplementary signals b11, c11. The supplementary input means 11 comprise two supplementary keys (not shown in figure), the first one for the video instantaneous blanking and the second one for the video instantaneous blurring. The previously described matrix structure will have to consequently provide two supplementary crossings, sensitive to the actuation of such two supplementary keys and whose short-circuit would make the remote-control processing unit 4 to receive supplementary signals b11 and c11. The transducer 5 receives as input from the remote-control processing unit 4 both the signals a4 previously described and the signals b4,c4 whose activation is consequent to the activation of the signals b11, c11. The remote-control signal amplifying circuit 7 receives as input from the receiving transducer 6 both the signals a6 previously described and the signals b6,c6 whose activation is consequent to the activation of the signals b11, c11.

The signal decoding processing unit 8 comprises first and second supplementary control outputs b8, c8. For this purpose the TV set 1 comprises means 12, 13 for the video signal instantaneous blanking and blurring, respectively. The video signal instantaneous blanking means 12 comprise a switch I1, whose first end is connected to a positive voltage V+ and whose second end is connected to the luminance/chrominance circuit 9. The switching of the switch I1 is controlled by the first supplementary control output b8. It is known that the luminance/chrominance circuit 9 generally comprises an integrated circuit, an input of which allows an instantaneous blanking of the video signal, once a suitable voltage is supplied to it. Namely, the video signal is led to a switching off level. In particular, a "high" voltage causes the instantaneous blanking of the video signal, whereas a "low" voltage allows the usual operation of the TV set. During the mode of video signal instantaneous blanking, a high voltage allows therefore to replace the variable video signals R, G, B, between one "blanking" pulse and the following one, with a DC level equal to the black level of the signals R, G, B. Anyway, in case the luminance/chrominance circuit 9 does not comprise a video blanking input, an electric circuit for the replacement of the above-mentioned signals R,G,B can be always implemented. Said circuit is not described here in detail, as its implementation is considered to be known to the person skilled in the art.

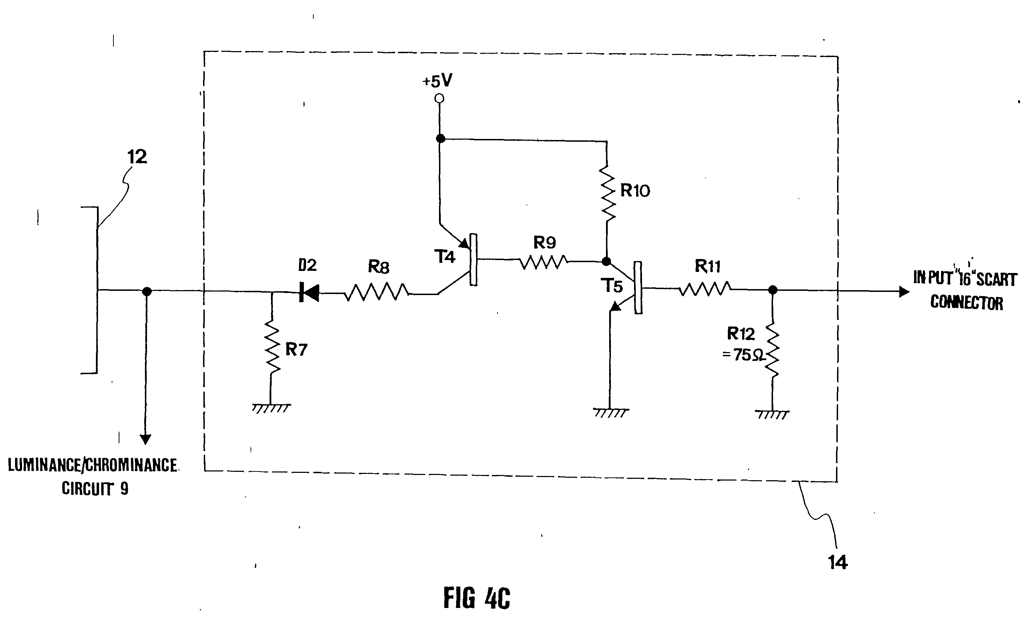

It is worth noting that it is particularly quite easy to locate the circuital point to which the voltage V+ is to be supplied by means of the switch I1 to implement the present invention as far as the video signal instantaneous blanking is concerned, whenever the TV set 1 is equipped with a connector for EURO-AV signal, also known as "SCART" connector. Said SCART connector, indicated under numeral 10 in Fig. 2, is now commonly used in European TV sets, and is compulsory in some countries. As it is known, the SCART connector comprises 21 inputs. In particular, the input "16" of the same is connected directly to the input for the instantaneous video blanking of the luminance/chrominance circuit 9 and allows the implementation of the instantaneous video blanking with input voltage in the range of 1 to 3V and the TV usual operation with voltages in the range of 0 to 0.4V with an input resistance of 75Ω. In this case it becomes very easy to connect directly the second end of the switch I1 to any point of the connection between the input "16" of the SCART connector 10 and the input for the instantaneous video blanking of the integrated circuit inside the luminance/chrominance circuit 9. It is worth noting that in this case, however, a "buffer" circuit 14 should be preferably provided, to be located between the SCART connector 10 and the video signal instantaneous blanking means 12 in order to not varying the impedance and voltage standard characteristics provided for the input "16" of the SCART connector. Said buffer circuit 14 will be described by way of example by referring to Fig. 4C.

The video signal instantaneous blurring means 13 comprise a switch I2 and a low-pass filter LPF. The first end of the switch I2 is connected to the low-pass filter LPF, whereas the second end of the switch I2 is connected to the luminance/chrominance circuit 9. The switching of the switch 12 is controlled by the second supplementary control output c8.

The activation of said control outputs b8, c8 respectively, consequent to the activation of the signals b11 and c11 respectively by the supplementary input means 11, allows the activation of the video signal instantaneous blanking or instantaneous blurring, respectively. The switches I1, I2 can be therefore switched between a non-operating condition (open switch, shown in figure) standard operation of the TV set 1 wherein the first and second supplementary control outputs b8, c8 are not active, and an operating condition (closed switch, not shown in figure) which effects the instantaneous blanking or the instantaneous blurring of the video signal, wherein at least one of the outputs b8, c8 is active.

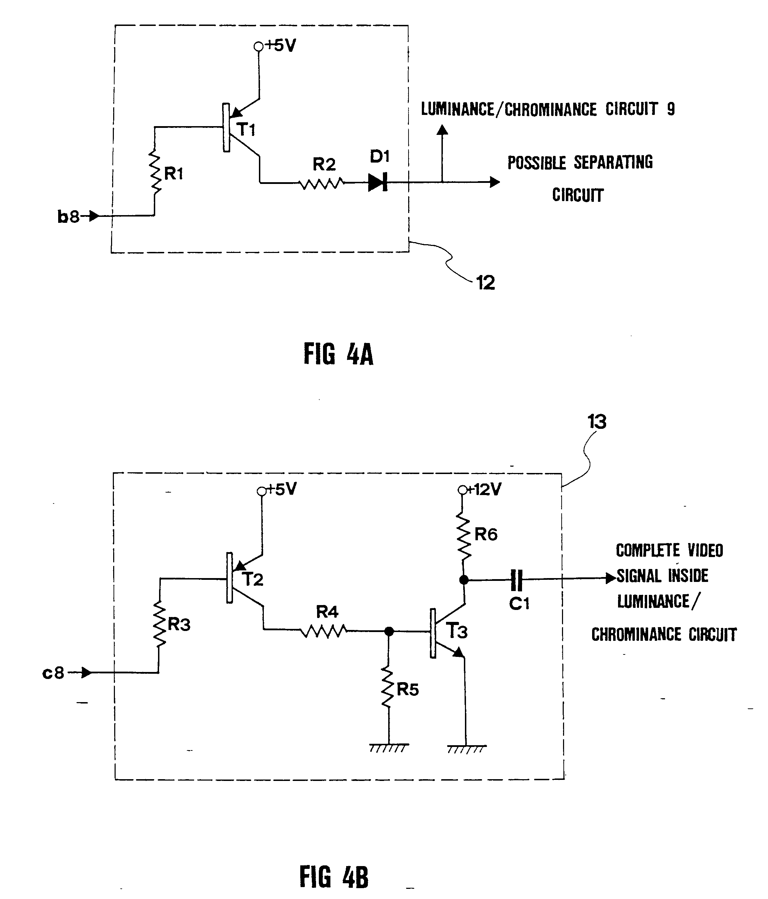

In particular, the activation of the first supplementary control output b8 switches the switch I1 into its operating condition and effects the connection of the positive voltage V+ to the luminance/chrominance circuit 9 as previously described, by providing the instantaneous blanking of the video signal. The activation of the second supplementary control output c8 switches the switch I2 into the closed-switch condition and effects instead the connection of the low-pass filter LPF to the luminance/chrominance circuit 9. In this case a low-pass filtering action inside the luminance/chrominance circuit 9 on the complete video signal (i.e. comprising both luminance and chrominance information) is effected. Particularly, said filtering will result in reducing drastically the video signal bandwidth, usually equal to approximately 5MHz, to a 300kHz value approximately or similar, for example, so as to allow a very limited intelligibility of the picture broadcast in that moment. The modes according to which said reduction is provided will be better described by referring to Fig. 4B. Different modes for the instantaneous video blurring will be subsequently described.

The switches I1, I2 switch from a non-operating to an operating condition whenever the first and the second supplementary signals b11, c11 respectively are activated. In particular, the signals b7, c7, whose respective activation is consequent to the activation of the signals b11, c11 are associated to bistable storage means with which the remote-control signal decoding processing unit 8 is equipped. This means that a first actuation on the first supplementary key will activate the bistable storage means by instantaneously blanking the video signal, whereas a second actuation of the first supplementary key will deactivate the bistable storage means by instantaneously restoring the video signal. On the contrary, a first actuation on the second supplementary key will instantaneously blur the video signal, which will be instantaneously restored by a second actuation on the second supplementary key. However, it is worth noting that (in case the function for the instantaneous video blanking and instantaneous video blurring are both present) the activation of the operating condition of the instantaneous video signal blanking means 12 prevails over the activation of the operating condition of the instantaneous video signal blurring means 13. By deactivating the signal for the instantaneous video signal blanking after having activated the signal for the instantaneous video signal blurring, will instantaneously restore the video signal blurring function on the TV set 1.

During the instantaneous video signal blanking or instantaneous video signal blurring mode, symbols indicating instantaneous video blanking or instantaneous video blurring respectively can be generated on the screen of the TV set 1. In said case, the system for controlling the vision of TV pictures according to the present invention should comprise means for displaying on screen said symbols. It would be better, however, to provide said mode for the instantaneous video blurring only, to signal the absence of a possible TV malfunction; in case of instantaneous video blanking it would be better for that said symbols not to be shown, as they could draw users' attention, by disturbing them. In fact, a TV screen sending out some quantity of light emission by the CRT, even if low, or showing a message, even if small, has a strong "enchanting" power on users, by continuously drawing their attention.

Alternative embodiments to what described and shown by referring to Fig. 2 could be provided. In particular, the activation of the second signal c11 for the instantaneous blurring can control a band-pass filter, instead of a low-pass filter, on the complete video signal, or the means 13 for the instantaneous video blurring can comprise a "scrambling" digital system of the video signal for reducing the intelligibility of the pictures displayed on the CRT.

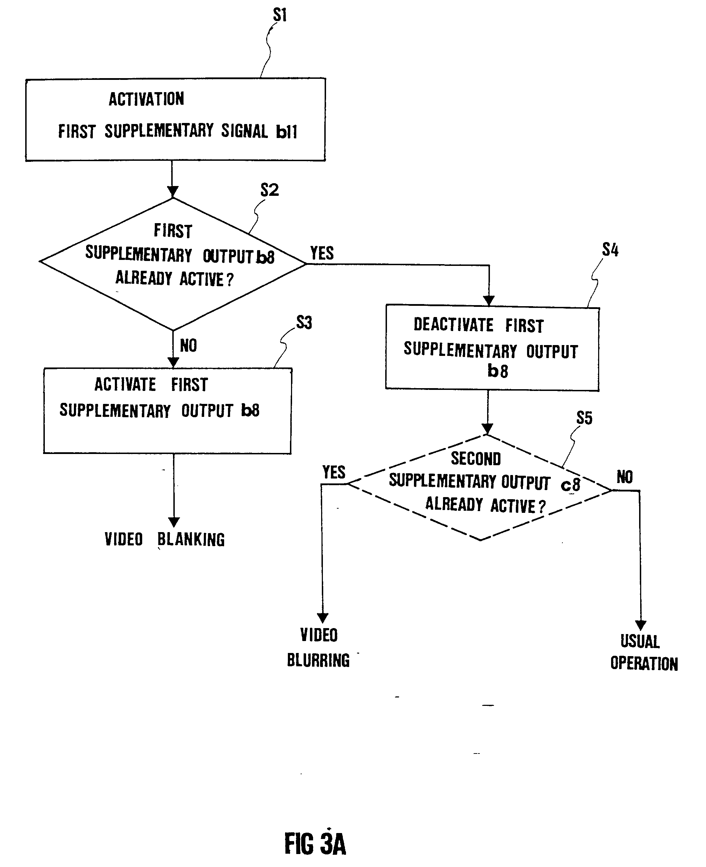

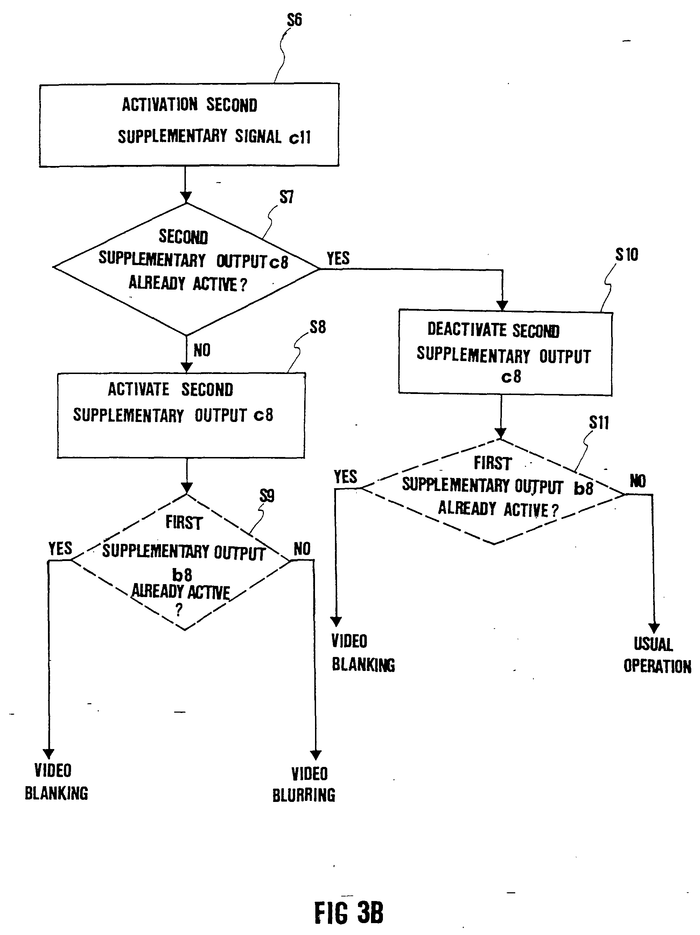

Figures 3A and 3B will be here below referred to, which illustrate a flow-chart for an example of programming the signal decoding processing unit 8 so that the first and second supplementary outputs b8, c8 can be activated respectively in connection with the first and second supplementary signals b11, c11.

Figure 3A shows the software modifications which have to be implemented on the signal decoding processing unit 8 with respect to the activation of the first supplementary signal b11. Upon activation of said first supplementary signal b11, occurring in the step S1, the flow proceeds to a decision-step S2, wherein it is checked whether the first supplementary output b8 is already active or not. In case it is not, the flow branches to a step S3 wherein said first supplementary output b8 is activated by consequently instantaneous blanking of the video signal. Otherwise, the flow proceeds to a step S4 wherein the first supplementary output b8 is deactivated. For better understanding, an additional decision step S5 is shown, illustrated by a dotted line in figure, as it is not performed by the processing unit 8. In said step it can be noted that the deactivation of the first supplementary output, performed in the preceding step S4, restores the video signal blurring on the TV set 1 if the second supplementary output c8 is already active or the usual operation if the second supplementary output c8 is not active.

Figure 3B shows the software modifications which have to be implemented on the processing unit 8 with respect to the activation of the second supplementary signal c11. Upon activation of said second supplementary signal c11, occurring in the step S6, the flow proceeds to a decision-step S7, wherein it is checked whether the second supplementary output c8 is already active or not. In case it is not, the flow branches to a step S8 wherein said second supplementary output c8 is activated. The step S9 (not performed by the processing unit 8 and therefore illustrated by a dotted line) shows by way of explanation how the activation of the second supplementary output c8 does not vary the video blanking mode in case the first supplementary output b8 is active.

In case, instead, that in the decision-step S7 it is checked that the second supplementary output c8 is active, the flow proceeds to a step S10 wherein said second supplementary output is deactivated. The decision-step S11 (not performed by the processing unit 8 and therefore illustrated by dotted lines) shows how the deactivation of the second output c8 does not vary the video blanking mode in case the first supplementary output b8 is active.

From now on Fig. 4A and 4B will be referred to.

Fig. 4A shows by way of example means 12 for the instantaneous blanking of the video signal, already briefly described with reference to the preceding Fig. 2. In particular, the same comprises current-limiting resistors R1 and R2, a switching pnp transistor T1 and a diode D1. The supplementary output b8 of the processing unit 8 is connected to a first end of the resistor R1, whose second end is connected to the base of the transistor T1. The emitter of T1 is connected to the DC power supply of +5V (V+ in Fig.2), whereas the collector of the same is connected to a first end of the resistor R2, whose second end is connected to the anode of diode D1. The cathode of D1 is then connected to the luminance/chrominance circuit 9, possibly on the connection leading to the buffer device separating the input "16" of the SCART connector, if the same is present.

During operation, the activation of the first supplementary signal b11, in the examined case, will set the first supplementary output b8 to a logic low (0.2V for example). The transistor T1 will then start to conduct and a logic high will be input into the video blanking input of the luminance/chrominance circuit, by causing the instantaneous blanking of the video signal. The presence of the diode D1 is a "wired OR" circuital arrangement which allows the separation of instantaneous video signal blanking means 12 from outer signals. A subsequent activation of the first supplementary signal b11 will set the first supplementary output b8 at a logic high, by cutting off the transistor T1 and restoring the TV signal to the conditions preceding the blanking.

Fig. 4B shows then an example of embodiment of the video signal blurring means 13, already briefly described with reference to the preceding fig. 2. In particular, current-limiting resistors R3, R4, R5 and R6, a switching pnp transistor T2, a switching npn transistor T3 and a capacitor C1 are provided. The supplementary output c8 of the processing unit 8 is connected to a first end of the resistor R3, second end of which is connected to the base of the transistor T2. The emitter of T2 is connected to the DC power supply of +5V, whereas the collector is connected to a first end of the resistor R4, whose second end is connected both to the first end of the resistor R5 and to the base of the transistor T3, the second end of the resistor R5 being grounded. The emitter of T3 is grounded, whereas the collector is connected both to a first end of the resistor R6 and to a first end of the capacitor C1. The second end of the resistor R6 is connected to the DC power supply of +12V, whereas the second end of the capacitor C1 is connected to the complete video signal, i.e. comprising both luminance and chrominance information, but subsequent to the picking up of synchronism pulses so that the low-pass filtering does not influence the shape of said pulses and therefore the phase and the synchronization of the picture.

During operation, in case the activation of the second supplementary signal c11 sets the second supplementary output c8 at a logical low, the transistors T2 and T3 start to conduct. The transistor T3, in particular, once reached saturation, short-circuits the capacitor C1 substantially to ground. In this way, a low-pass filter for the complete video signal is formed, together with the luminance/chrominance inner resistance seen from the capacitor C1 connecting point. By suitably dimensioning the capacity of the capacitor C1, it is possible to obtain a desired reduction of the bandwidth of the complete video signal which is displayed on the CRT, by obtaining a cut-off frequency of 300kHz, for example. A subsequent activation of the second supplementary signal c11 will set the second supplementary output c8 to a logic low, by cutting off the transistors T2 and T3 and restoring the TV signal to the conditions preceding the blurring. In particular, the values of the resistor R6, capacitor C1 and transistor T3 will be designed so as not to influence the complete video signal during the usual TV operation.

Fig. 4C will be now referred to, which shows as an example the buffer circuit 14 described with reference to the preceding fig. 2, in case the SCART connector 10 is provided. In particular, current-limiting resistors R7,R8,R9,R10,R11 and R12 are provided, as well as a switching pnp transistor T4, a switching npn transistor T5 and a diode D2. The output of the video signal blanking means 12 (see figure 4A) is connected to the luminance/chrominance circuit 9 (not shown in figure), to the cathode of diode D2 and to a first end of the resistor R7, whose second end is grounded. The anode of diode D2 is connected to a first end of the resistor R8 whose second end is connected to the collector of the transistor T4. The emitter of the transistor T4 is connected to a DC power supply of +5V, whereas the base of the transistor T4 is connected, across R9, to the collector of the transistor T5 and to a first end of the resistor R10. The second end of the resistor R10 is connected to the-DC power supply of +5V too. The emitter of the transistor T5 is grounded. The base of the transistor T5 is connected, across R11, to the input "16" of the SCART connector and to a first end of the resistor R12 of 75Ω (standard value of the input resistance of the input "16" of the SCART connector), whose second end is grounded.

During operation, in case no blanking voltage is supplied to the luminance/chrominance circuit by the blanking means 12, the transistors T4 an T5 can be brought into conduction by an outer blanking signal (voltage 1ö3V) supplied to the input "16" of the SCART connector and, by means of the same, this signal is transmitted, across D2, to the luminance/chrominance circuit 9; even in case no blanking voltage is supplied by the blanking means 12, with no outer blanking signal supplied to the input "16" of the SCART connector (and thus voltage 0ö0.4V), the transistors T4 and T5 are cut-off, and no blanking occurs.

In case an instantaneous blanking voltage is supplied by the blanking means 12 to the luminance/chrominance circuit, no influence on the input characteristics of the input "16" of the SCART connector, seen from outside, is caused, even if at the same time the blanking function is provided by the blanking means 12. A circuit "OR" is thus provided, whose inputs are the blanking means' 12 outputs and the input "16" of -the SCART connector, whose output leads to the luminance/chrominance circuit.

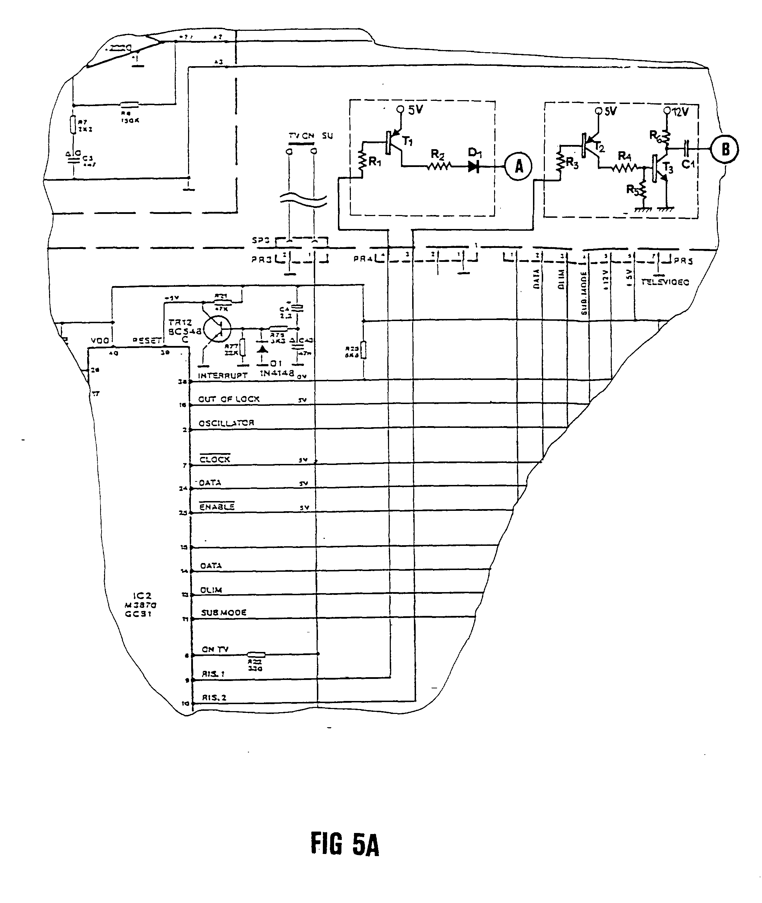

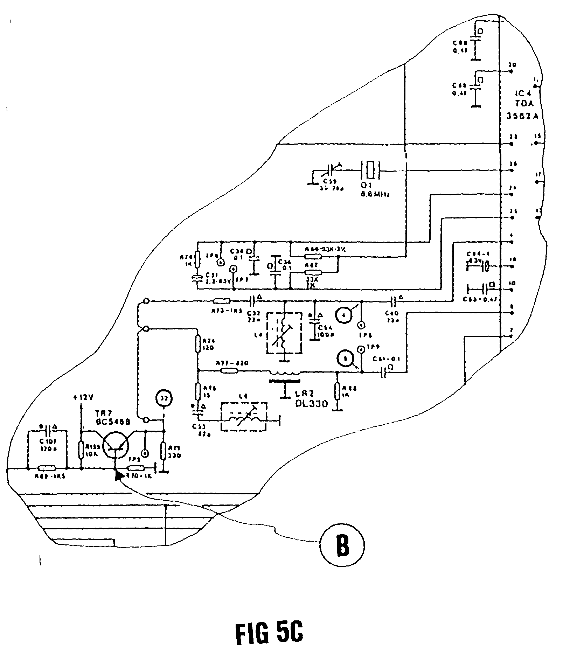

The fig. 5A and 5C will be then referred to, which illustrate partial circuit diagrams of a commercial TV set by the Italian firm Voxson SpA, chassis CT9.

In fig. 5A, the microprocessor IC2 M3870 GCB1 represents the remote-control signal decoding processing unit 8 described with reference to the preceding fig. 2. The outputs "9" and "10" of said microprocessor are usually not used. In the figure, they respectively represent the first and second supplementary control outputs described with reference to the preceding fig. 2. Said outputs "9" and "10" constitute the control signals of the means 12, 13. Said means are referred to in fig. 5A according to what already shown with reference to the preceding figs. 4A and 4B. The symbols A and B indicate the points at which said means 12, 13 will have to be connected inside the TV set.

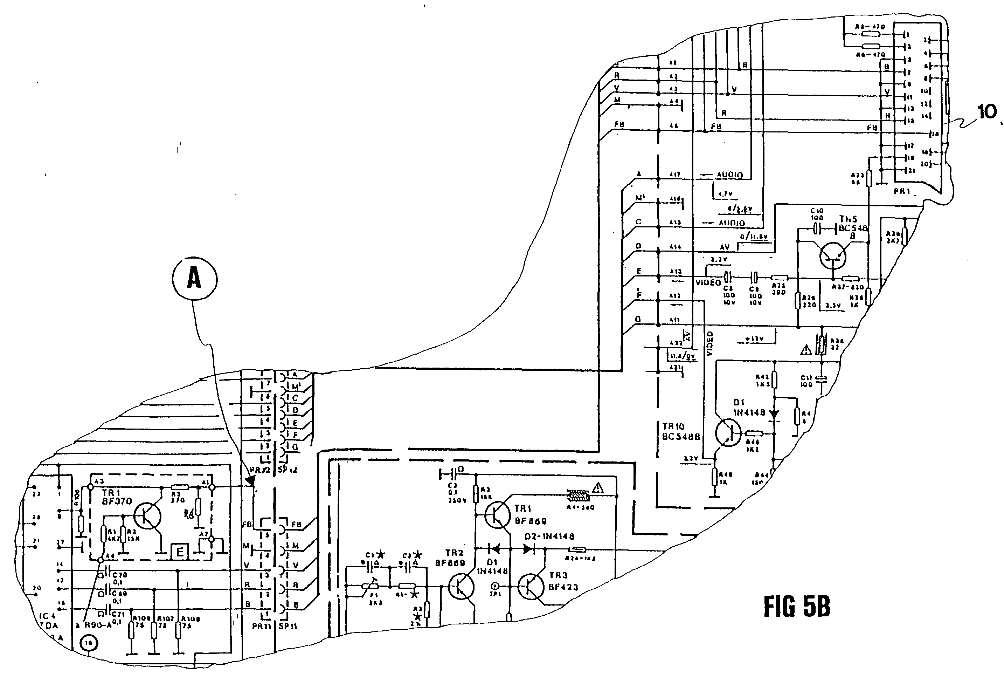

To this purpose, fig. 5B shows the point A to which the output of the instantaneous video signal blanking means 12 is to be connected. Said point A is located on the connection linking the input "16" of the SCART connector 10, on the right top on the figure, to the video blanking input of the integrated circuit IC4 TDA 3562A, which is the "heart" of the luminance/chrominance circuit.

Fig 5C shows instead the point B to which the output of the video blurring means 13 is to be connected. Said point B is located inside the luminance/chrominance circuit subsequent to the pick up of the synchronism signal; the signal passing through this point is complete, i.e. comprising both luminance and chrominance information.

An additional embodiment of the present invention further allows to associate, in a fixed manner or at predetermined hours, through a storage operation which is possible to be executed only through the remote-control, the video blanking mode to the reception of some television channels chosen by users and considered by them too risky to minors for the kind of pictures and programs transmitted. In this way it is possible to obtain a complete, or lasting for a fixed time, exclusion of the vision of the above mentioned channels to those users not having the remote-control and therefore unable to change what already programmed. They can however use the TV set by means of the local controls. Alternatively, a TV equipped with two remote-controls could be provided: a first "complete" remote-control equipped with the function of storing and recalling all channels and programs, a second "restricted" remote-control allowing to recall the selected programs only, apart from the access to the standard functions. Alternatively, known circuitries could be provided, by using a numeric "key word" accessible to authorized persons only.

The functions of total and partial "block" of the vision of some stations are implemented by means of the decoder 8 of fig. 2 and can be provided, together with what previously described for the immediate video blanking, by:
- appropriate programming of the decoding processing unit 8 and increasing in the storage capacity, the last generally already present in the decoding processing units of the TV sets with remote-controls currently available on the market; and
- addition on the remote-control of keys, switches and subsequent production of codes for regulating the "clock" inside the decoding processing unit 8 and for storing the video blanking in connection with the chosen channels, whose numbers can be found through numeric keys. The indications can be visualized on the CRT.

More in detail, the following will be necessary:
- the TV set will have to be equipped with what previously described with reference to the fig. 2 for the instantaneous video blanking;
- the TV set will have to be equipped with an inner clock controlled by the remote-control keys;
- the TV set, furthermore, will have to be equipped with a OSD(on screen display) or with a LED display for indicating:
   a) the chosen program, the station to be stored and/or already stored on the above mentioned programmed site;
   b) date, hours and minutes;
   c) indications for video block;
   d) date, hours and minutes of start of block; and
   e) date, hours and minutes of end of block;
- the TV set furthermore has to be equipped with means for programming the operations here below described, after receipt of binary codes sent by the remote-control transmitter by actuating the corresponding key-switches:
   i) operation for starting storage by means of dedicated key (program-indicating light begins flashing) ;
   ii) operation for recalling the program (memory location) which is wanted to be seen, selected by the number entered with keys 0..9 (program-indicating light ends flashing);
   iii) operation for recalling the station to be stored on the program recalled in the previous step by actuating a specific key (channel-indicating light begins flashing) followed by the number of channel selected by keys 0...9 (channel-indicating light ends flashing);
   iv) operation for storing start of video block (light indicating date, hours and minutes of starting block begins flashing);
   v) operation for storing end of the block (indicating light ends flashing) - not indicating dates means everyday;
   vi) operation for setting video block by means of dedicated key;
   vii) operation for entering the above mentioned operations by means of a dedicated key.

All above would result in that a specific station stored on a definite program site will be video-blocked from a certain hour to another, everyday or on a particular day.

In a further embodiment, the blurring means 13 controlled by the output c8 could comprise means for varying the CRT focusing, to vary the focusing voltage of the three guns of the CRT, by providing in an equivalent way the video signal instantaneous blurring by reducing the passband as visible to the human eyes. In fact, the defocusing of the electronic beam leads to a drastic decrease in the picture definition on the CRT screen and thus to a result equivalent to the reduction of the passband in the luminance/chrominance circuit.

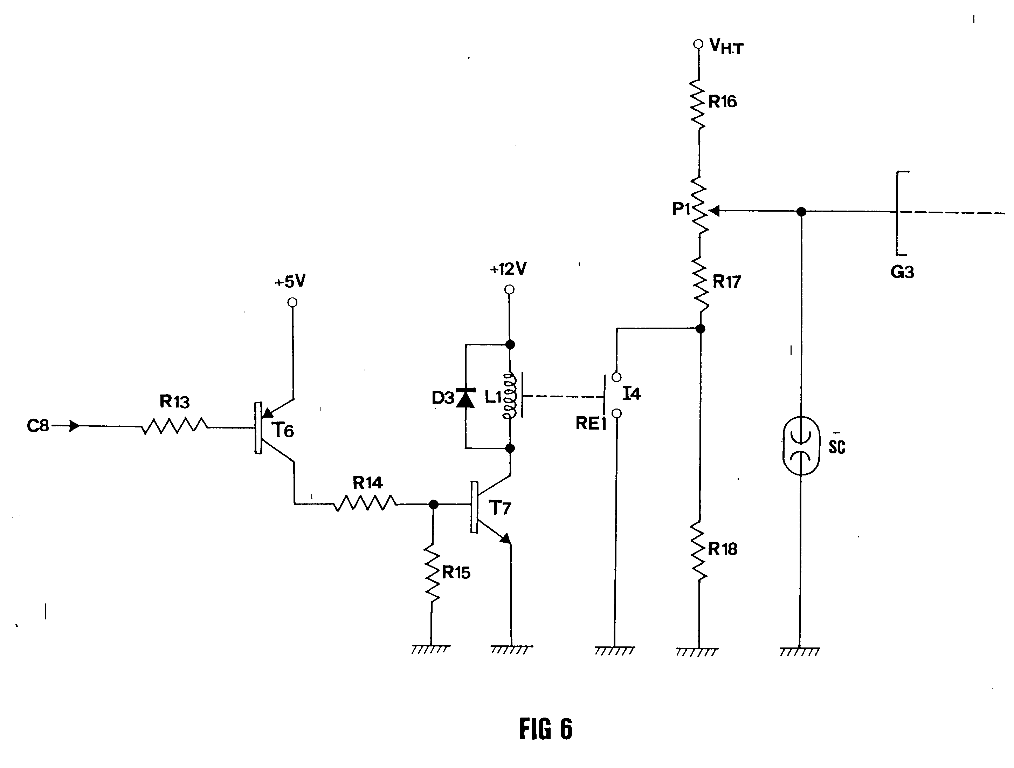

A not limitative example of said embodiment is shown in Fig. 6.

In particular, current-limiting resistors R13, R14,R15,R16,R17 and R18, a focus-regulating potentiometer P1, switching transistors T6 and T7, a relay RE1, a coil L1 of the relay RE1 paralleled to a protection diode D3, normally open contacts I4 of the relay RE1, a discharger SC and a focus grid G3 are provided. The second supplementary output c8 is connected to the first end of the resistor R13, whose second end is connected to the base of transistor T6. The emitter of T6 is connected to a DC power supply of +5V, whereas the collector of the same is connected to the first end of the resistor R14, whose second end is connected to the first end of resistor R15 and to the base of transistor T7, the emitter of the latter being grounded. The collector of the transistor T7 is connected to the first end of the parallel between the coil L1 and the diode D3, the second end of said parallel being connected to the DC power supply of +12V. A first one of the contacts I4 of RE1 is grounded, whereas the second one is connected to the point linking R17 and R18. The resistors R16, R17, R18 and the potentiometer P1 are located in series between a high voltage Vₕₜ and the ground. The wiper of the potentiometer P1 is connected, as usually happens in all TV sets, both to the CRT focus grid G3 and to a discharging device SC.

During operation, in case the activation of the second supplementary signal c11 (not shown in figure) sets the second supplementary output c8 to a logical low, the transistors T6 and T7 start to conduct and, by energizing the relay RE1, allow the contacts I4, which in figure are shown in open position, to close. The resistor R17 is therefore short-circuited to ground with the subsequent variation in-the voltage appearing on the potentiometer P1 and thus in the picture focusing by the grid G3. An appropriate choice of the resistors R16, R17, R18 and P1 values as well as an appropriate regulation of the potentiometer P1 for the optimum focus will allow obtaining the desired effect of the video signal blurring.

## Claims

1. A TV pictures vision control system, comprising a TV set, the TV set comprising means for editing a TV program being received and a TV remote control (2) to control in a standard way at the location where the program is viewed the functions of said TV set (1), **characterised in that** said TV remote control (2) comprises supplementary input means (11) for issuing first and/or second supplementary signals (b11, c11) respectively for the instantaneous blanking and/or instantaneous blurring of the video signal of the TV program, said first and/or second supplementary signals driving respective control outputs (b8, c8) in the TV set, and wherein the means for editing the TV program are means (12, 13) for the instantaneous blanking and/or instantaneous blurring of the TV program video signal acting upon reception, **through said respective control outputs (b8, c8),** of first and/or second supplementary signals (b11, c11) respectively for the instantaneous blanking and/or instantaneous blurring of the video signal of the TV program, each of said means (12, 13) for the instantaneous blanking and/or instantaneous blurring of the TV program video signal being switchable between,
a non-operating condition, wherein the corresponding supplementary control output (b8,c8) is not active,
and a respective operating condition which effects the instantaneous blanking and/or blurring of the video signal.

2. A TV pictures vision control system, according to claim 1, **characterized in that** said TV program is being received in response to at least signals remotely issued by a remote transmitter, and said remote transmitter is obtained through a TV remote control (2).

3. A TV pictures vision control system, according to claim 1, **characterized in that** only the means for the instantaneous blanking of the video signal of the TV program (12) are present.

4. A TV pictures vision control system, according to claim 1, **characterized in that** only the means for the instantaneous blurring of the video signal of the TV program (13) are present.

5. A TV pictures vision control system, according to claim 1, **characterized in that** the video signal instantaneous blanking means prevail over the instantaneous blurring means in case they are both' present.

6. A TV pictures vision control system according to one of the preceding claims, **characterized in that** said TV set (1) comprises a SCART connector for EURO-AV signals (10) and wherein the output of said video signal instantaneous blanking means (12) is located on the connection linking the input "16" of the SCART connector (10) to a luminance/chrominance circuit (9) comprised in the means (12) for the instantaneous blanking of the TV program video signal.

7. A TV pictures vision control system according to claim 6, **characterized in that** it comprises a buffer circuit (14) located between the SCART connector (10) and the means (12) for the video signal instantaneous blanking, for not varying the nominal impedance and voltage values for the input "16" of the SCART connector (10), both when the instantaneous blanking is operative and when it is not.

8. A TV pictures vision control system according to any of preceding claims, **characterized in that** said video signal instantaneous blanking means (12) comprise a first switch (I1), the activation of the first supplementary signal (b11) for the video blanking being such as to control the video blanking by said first switch (I1).

9. A TV pictures vision control system according to any of preceding claims, wherein said video signal instantaneous blurring means (13) are connected to a luminance/chrominance circuit (9) at a point where the complete video signal is present, i.e. comprising both luminance and chrominance information and subsequently to the pick-up of the synchronism signal.

10. A TV pictures vision control system according to claim 9, wherein said means (13) for the instantaneous blurring of the video signal comprise a second switch (I2) and a low-pass filter (LPF) or band-pass filter, the activation of the second supplementary signal (c11) for the instantaneous video blurring being such as to control the instantaneous video blurring by means of said low-pass (LPF) or band-pass filter and said second switch (I2).

11. A TV pictures vision control system according to claim 10 wherein said low-pass filter (LPF) reduces the bandwidth of the complete TV signal up to approximately 300 kHz.

12. A TV pictures vision control system according to any of preceding claims, wherein said video signal instantaneous blurring means (13) comprise a video signal "scrambling" digital system for reducing the minors' intelligibility of the pictures displayed on the CRT.

13. A TV pictures vision control system according to any of preceding claims, wherein said instantaneous blurring means (13) comprise CRT focusing variation means, for varying the focusing voltage of the three guns of the cathode ray tube.

14. A TV pictures vision control system according to any of the preceding claims **characterized in that** it comprises means for displaying symbols on the screen, so that during the video blanking or blurring conditions corresponding symbols indicating video blanking or video blurring are respectively generated on the TV set (1) screen.

15. A TV pictures vision control system according to any of the preceding claims, **characterized in that** it comprises an inner clock controlled by the remote-control keys (2) and programming display means for providing the possibility of programming the activation of said video instantaneous blanking means (12) on desired channels, at desired hours and for desired periods.

16. A TV pictures vision control system, according to claim 2, **characterised in that** said supplementary input means (11) comprises a supplementary key (11) for issuing the first supplementary signal (b11) for the instantaneous blanking the video signal of the TV program, said first supplementary signal (b11) driving a control output (b8) in the TV set, and wherein the means (12) for the instantaneous blanking of the TV program video signal acting upon reception of the first supplementary signal (b11) for the instantaneous blanking of the video signal of the TV program, said means (12) for the instantaneous blanking of the TV program video signal being switched by the pressure of the supplementary key (11) between,
a non-operating condition, wherein the corresponding supplementary control output (b8) is not active,
and a respective operating condition which effects the instantaneous blanking of the video signal.

17. A TV pictures vision control system, according to claim 16, **characterised in that** further comprise a remote-control processing unit (4), transmission and receiving transducers (5,6), remote-control signal amplifier (7) and signal-decoding processing unit (8) wherein said remote-control processing unit (4), transmission and receiving transducers (5,6), remote-control signal amplifier (7) and signal-decoding processing unit (8) are also sensitive to the activation of said first supplementary signals (b11) and said remote-control signal-decoding processing unit (8) comprises the first supplementary control outputs (b8).

18. A TV pictures vision control system, according to claim 2, **characterised in that** said supplementary input means (11) comprises a supplementary key (11) for issuing a second supplementary signal (c11) for the instantaneous blurring the video signal of the TV program, said second supplementary signal (c11) driving a control output (c8) in the TV set, and wherein the means (13) for the instantaneous blurring of the TV program video signal acting upon reception of the supplementary signal (c11) for the instantaneous blurring of the video signal of the TV program, said means (13) for the instantaneous blurring of the TV program video signal being switched by the pressure of the supplementary key (11) between,
a non-operating condition, wherein the corresponding supplementary control output (c8) is not active,
and a respective operating condition which effects the instantaneous blurring of the video signal.

## Patentansprüche

1. System zum Steuern der Darstellung von Fernsehbildern mit einem TV-Gerät, wobei das TV-Gerät Mittel zum Editieren eines empfangenen TV-Programms und eine TV-Fernsteuerung (2) zum Steuern der Funktionen des TV-Geräts (1) in einer üblichen Weise am Ort, an dem das Programm gesehen wird, enthält,
**dadurch gekennzeichnet, dass** die TV-Fernbedienung (2) ein zusätzliches Eingabemittel (11) zum Ausgeben erster und/oder zweiter Zusatzsignale (b11, c11) zum augenblicklichen Dunkeltasten und/oder augenblicklichen Verzerren des TV-Programm-Videosignals enthält, wobei die ersten und/oder die zweiten Zusatzsignale entsprechende Steuerausgaben (b8, c8) im TV-Gerät auslösen, und wobei die Mittel zum Editieren des TV-Programms Mittel (12, 13) zum augenblicklichen Dunkeltasten und/oder augenblicklichen Verzerren des TV-Programm-Videosignals sind, die bei Empfang, mittels der jeweiligen Steuerausgaben (b8, c8), der ersten und/oder der zweiten Zusatzsignale (b11, c11) zum augenblicklichen Dunkeltasten und/oder augenblicklichen Verzerren des TV-Programm-Videosignals aktiv werden, wobei jedes der Mittel (12, 13) zum augenblicklichen Dunkeltasten und/oder augenblicklichen Verzerren des TV-Programm-Videosignals schaltbar ist zwischen einem Außerbetriebzustand, in dem die zugehörige Zusatzsteuerausgabe (b8, c8) nicht aktiv ist, und einem entsprechenden Betriebzustand, der das augenblickliche Dunkeltasten und/oder Verzerren des Videosignals bewirkt.

2. System zum Steuern der Darstellung von Fernsehbildern gemäß Anspruch 1,
**dadurch gekennzeichnet, dass** das TV-Programm empfangen wird in Reaktion auf zumindest Signale, die von einem Fernsender entfernt ausgegeben werden, und dass der Fernsender in einer TV-Fernsteuerung enthalten ist.

3. System zum Steuern der Darstellung von Fernsehbildern gemäß Anspruch 1,
**dadurch gekennzeichnet, dass** nur die Mittel zum augenblicklichen Dunkeltasten des TV-Programm-Videosignals (12) vorhanden sind.

4. System zum Steuern der Darstellung von Fernsehbildern gemäß Anspruch 1,
**dadurch gekennzeichnet, dass** nur die Mittel zum augenblicklichen Verzerren des TV-Programm-Videosignals (13) vorhanden sind.

5. System zum Steuern der Darstellung von Fernsehbildern gemäß Anspruch 1,
**dadurch gekennzeichnet, dass** die Mittel zum augenblicklichen Dunkeltasten des Videosignals Vorrang haben gegenüber den Mitteln zum augenblicklichen Verzerren für den Fall, dass beide vorhanden sind.

6. System zum Steuern der Darstellung von Fernsehbildern gemäß einem der vorhergehenden Ansprüche,
**dadurch gekennzeichnet, dass** das TV-Gerät (1) einen SCART-Anschluss für EURO-AV-Signale (10) enthält, und wobei die Ausgabe der Mittel zum augenblicklichen Dunkeltasten des Videosignals (12) an der den Eingang "16" des SCART-Anschlusses (10) mit einer Luminanz/Chrominanz-Schaltung (9) verbindenden Verbindung, die in den Mitteln (12) zum augenblicklichen Dunkeltasten des TV-Programm-Videosignals enthalten ist, verfügbar ist.

7. System zum Steuern der Darstellung von Fernsehbildern gemäß Anspruch 6,
**dadurch gekennzeichnet, dass** es eine Pufferschaltung (14) enthält, die zwischen dem SCART-Anschluss (10) und den Mitteln zum augenblicklichen Dunkeltasten des Videosignals (12) angeordnet ist, um die Nenn-Impedanz und die Spannungswerte für den Eingang "16" des SCART-Anschlusses (10) nicht zu verändern, sowohl wenn die augenblickliche Dunkeltastung in Betrieb ist und wenn sie es nicht ist.

8. System zum Steuern der Darstellung von Fernsehbildern gemäß einem der vorhergehenden Ansprüche,
**dadurch gekennzeichnet, dass** die Mittel zum augenblicklichen Dunkeltasten des Videosignals (12) einen ersten Schalter (I1) enthalten, wobei die Aktivierung des ersten Zusatzsignals (b11) zum Video-Dunkeltasten derart ausgeführt ist, dass die Video-Dunkeltastung durch den ersten Schalter (I1) gesteuert wird.

9. System zum Steuern der Darstellung von Fernsehbildern gemäß einem der vorhergehenden Ansprüche,
wobei die Mittel zum augenblicklichen Verzerren des Videosignals (13) mit einer Luminanz/Chrominanz-Schaltung (9) an einer Stelle nach der Abnahme des Synchronisierungssignals verbunden sind, an der das vollständige Videosignal vorliegt, d.h. es enthält sowohl Luminanz- als auch Chrominanz-Informationen.

10. System zum Steuern der Darstellung von Fernsehbildern gemäß Anspruch 9,
wobei die Mittel zum augenblicklichen Verzerren des Videosignals einen zweiten Schalter (12) und einen Tiefpass-Filter (LPF) oder Bandpass-Filter enthalten, wobei die Aktivierung des zweiten Zusatzsignals (c11) zum augenblicklichen Videoverzerren derart ausgeführt ist, dass die Steuerung der augenblicklichen Videoverzerrung mittels des Tiefpass- (LPF) oder Bandpass-Filters und den zweiten Schalter (I2) gesteuert wird.

11. System zum Steuern der Darstellung von Fernsehbildern gemäß Anspruch 10,
wobei der Tiefpass-Filter (LPF) die Bandbreite des vollständigen TV-Signals auf näherungsweise 300 kHz reduziert.

12. System zum Steuern der Darstellung von Fernsehbildern gemäß einem der vorhergehenden Ansprüche,
wobei die Mittel zum augenblicklichen Verzerren des Videosignals (13) ein digitales System zum "Scramblen" des Videosignals enthalten, um die Verständlichkeit der Bilder, die auf der Katodenstrahlröhre (CRT) dargestellt sind, für Minderjährige zu reduzieren.

13. System zum Steuern der Darstellung von Fernsehbildern gemäß einen der vorhergehenden Ansprüche,
wobei die Mittel zum augenblicklichen Verzerren (13) Mittel zum Verändern der Fokussierung der CRT enthält, um die Fokussierungsspannung der drei Kanonen der Katodenstrahlröhre zu verändern.

14. System zum Steuern der Darstellung von Fernsehbildern gemäß einem der vorhergehenden Ansprüche,
**dadurch gekennzeichnet, dass** es Mittel zum Darstellen von Symbolen auf dem Bildschirm enthält, so dass während dem Videodunkeltast- oder -verzerrzustand entsprechende Symbole, die eine Videodunkeltastung oder eine Videoverzerrung anzeigen, jeweils auf dem Schirm des TV-Geräts (1) erzeugt werden.

15. System zum Steuern der Darstellung von Fernsehbildern gemäß einem der vorhergehenden Ansprüche,
**dadurch gekennzeichnet, dass** es eine interne Uhr, die durch die Tasten der Fernbedienung (2) gesteuert wird, und Mittel zum Anzeigen der Programmierung, um die Möglichkeit einer Programmierung der Aktivierung der Mittel zum augenblicklichen Videodunkeltasten (12) für bevorzugte Kanäle, zu bevorzugten Stunden und für bevorzugte Zeiträume bereit zu stellen, enthält.

16. System zum Steuern der Darstellung von Fernsehbildern gemäß Anspruch 2,
**dadurch gekennzeichnet, dass** die zusätzliche Eingabemittel (11) eine zusätzliche Taste (11), um das erste Zusatzsignals (b11) zum augenblicklichen Dunkeltasten des TV-Programm-Videosignals auszugeben, enthält, wobei das erste Zusatzsignal (b11) die Steuerausgabe (b8) im TV-Gerät auslöst, und wobei die Mittel zum augenblicklichen Dunkeltasten des TV-Programm-Videosignals bei Empfang des ersten Zusatzsignals (b11) zum augenblicklichen Dunkeltasten des TV-Programm-Videosignals hin aktiv werden, wobei die Mittel zum augenblicklichen Dunkeltasten des TV-Programm-Videosignals (12) durch Drücken der Zusatztaste (11) zwischen einem Außerbetriebzustand, in dem die entsprechende Steuerausgabe (b8) nicht aktiv ist und einem entsprechenden Betriebzustand, welcher die augenblickliche Dunkeltastung des Videosignals bewirkt, geschaltet werden.

17. System zum Steuern der Darstellung von Fernsehbildern gemäß Anspruch 16,
**dadurch gekennzeichnet, dass** es weiter eine Fernsteuer-Verarbeitungseinheit (4), Übermittlungs- und Empfangs-Signalgeber (5, 6), einen Fernsteuer-Signalverstärker (7) und eine Fernsteuer-Signaldekodier-Verarbeitungseinheit (8) enthält, wobei die Fernsteuer-Verarbeitungseinheit (4), die Übermittlungs- und Empfangs-signalgeber (5, 6), der Fernsteuer-Signalverstärker (7) und die Fernsteuer-Signaldekodier-Verarbeitungseinheit (8) auch reagieren auf die Aktivierung des ersten Zusatzsignals (b11), und wobei die Fernsteuer-Signaidekodier-Verarbeitungseinheit (8) die erste zusätzliche Steuerausgabe (b8) enthält.

18. System zum Steuern der Darstellung von Fernsehbildern gemäß Anspruch 2,
**dadurch gekennzeichnet, dass** das zusätzliche Eingabemittel (11) eine zusätzliche Taste (11) zum Ausgeben eines zweiten Zusatzsignals (c11) zum augenblicklichen Verzerren des TV-Programm-Videosignals enthält, wobei das zweiten Zusatzsignal (c11) im TV-Gerät eine Steuerausgabe (c8) auslöst, und wobei die Mittel (13) zum augenblicklichen Verzerren des TV-Programm-Videosignals bei Empfang des zweiten Zusatzsignals (c11) zum augenblicklichen Verzerren des TV-Programm-Videosignals hin aktiv werden, wobei die Mittel zum augenblicklichen Verzerren des TV-Programm-Videosignals durch Drücken einer zusätzlichen Taste (11) zwischen einem Außerbetriebzustand, in dem die entsprechende zusätzliche Steuerausgabe (c8) nicht aktiv ist, und einem entsprechenden Betriebzustand, welcher die augenblickliche Verzerrung des Videosignals bewirkt, geschaltet werden.

## Revendications

1. Système de commande de visualisation d'images de télévision, comprenant un appareil de télévision, l'appareil de télévision comprenant des moyens pour éditer un programme de télévision qui est reçu, et une unité de télécommande de télévision (2) pour commander d'une manière standard les fonctions dudit appareil de télévision (1), à l'emplacement où le programme est vu, **caractérisé en ce que** ladite unité de télécommande de télévision (2) comprend des moyens d'entrée supplémentaires (11) pour délivrer respectivement des premier et/ou second signaux supplémentaires (b11,c11) pour réaliser la suppression simultanée et/ou la distorsion instantanée du signal vidéo du programme de télévision, lesdits premier et/ou second signaux supplémentaires commandent des sorties de commande respectives (b8,c8) dans l'appareil de télévision, et dans lequel les moyens pour éditer le programme de télévision sont des moyens (12,13) pour réaliser la suppression instantanée et/ou la distorsion instantanée du signal vidéo du programme de télévision, agissant lors de la réception, par lesdites sorties de commande respectives (b8, c8) des premier et/ou second signaux supplémentaires (b11,c11) respectivement pour la suppression instantanée et/ou la distorsion instantanée du signal vidéo du programme de télévision, chacun desdits moyens (12,13) pour la suppression instantanée et/ou la distorsion instantanée du signal vidéo du programme de télévision étant commutable entre une condition de non fonctionnement, dans lequel la sortie de commande supplémentaire correspondante (b8,c8) n'est pas active, et
une condition de fonctionnement respective, qui réalise la suppression et/ou la distorsion instantanée du signal vidéo.

2. Système de commande de visualisation d'images de télévision selon la revendication 1, **caractérisé en ce que** ledit programme de télévision est reçu en réponse au moins de signaux délivrés à distance par un émetteur distant, et ledit émetteur distant est obtenu au moyen d'une unité de télécommande de télévision (2).

3. Système de commande de visualisation d'images de télévision selon la revendication 1, **caractérisé en ce que** seuls sont présents les moyens de suppression instantanée du signal vidéo du programme de télévision (12).

4. Système de commande de visualisation d'images de télévision selon la revendication 1, **caractérisé en ce que** seuls sont présents les moyens de distorsion instantanée du signal vidéo du programme de télévision (13).

5. Système de commande de visualisation d'images de télévision selon la revendication 1, **caractérisé en ce que** les moyens de suppression instantanée du signal vidéo agissent de façon prioritaire par rapport aux moyens de distorsion instantanée dans le cas où ces moyens sont tous présents.

6. Système de commande de visualisation d'images de télévision selon l'une des revendications précédentes, **caractérisé en ce que** ledit ensemble de télévision (1) comprend un connecteur SCART pour des signaux EURO-AV (10), et dans lequel le signal de sortie desdits moyens (12) de suppression instantanée du signal vidéo, est situé dans la liaison reliant l'entrée "16" du connecteur SCART (10) à un circuit de luminance/de chrominance (9) contenu dans les moyens (12) de suppression instantanée du signal vidéo du programme de télévision.

7. Système de commande de visualisation d'images de télévision selon la revendication 6, **caractérisé en ce qu'**il comprend un circuit tampon (14) situé entre le connecteur SCART (10) et les moyens (12) de suppression instantanée du signal vidéo, pour ne pas modifier les valeurs nominales d'impédance et de tension pour l'entrée "16" du connecteur SCART (10), à la fois lorsque la suppression instantanée agit et lorsqu'elle n'agit pas.

8. Système de commande de visualisation d'images de télévision selon l'une quelconque des revendications précédentes, **caractérisé en ce que** lesdits moyens (12) de suppression instantanée du signal vidéo comprennent un premier interrupteur (I1), l'activation du premier signal supplémentaire (p11) pour la suppression vidéo étant à même de commander la suppression vidéo au moyen dudit premier interrupteur (I1).

9. Système de commande de visualisation d'images de télévision selon l'une quelconque des revendications précédentes, dans lequel lesdits moyens (13) de distorsion instantanée du signal vidéo sont connectés à un circuit de luminance/chrominance (9) en un point où le signal vidéo complet est présent, c'est-à-dire comprenant à la fois une information de luminance et une information de chrominance et pour détecter ultérieurement le signal de synchronisme.

10. Système de commande de visualisation d'images de télévision selon la revendication 9, dans lequel lesdits moyens (13) de distorsion instantanée du signal vidéo comprennent un second interrupteur (12) et un filtre passe-bas (LPF) ou un filtre passe-bande, l'activation du second signal supplémentaire (c11) pour la distorsion vidéo instantanée étant à même de commander la distorsion vidéo instantanée au moyen dudit filtre passe-bas (LPF) ou dudit filtre passe-bande et dudit second interrupteur (I2).

11. Système de commande de visualisation d'images de télévision selon la revendication 10, dans lequel ledit filtre passe-bas (LPF) réduit la largeur de bande du signal de télévision complet jusqu'à environ 300 kHz.

12. Système de commande de visualisation d'images de télévision selon l'une quelconque des revendications précédentes, dans lequel lesdits moyens (13) de distorsion instantanée du signal vidéo comprennent un système numérique "de brouillage" du signal vidéo, servant à réduire l'intelligibilité, pour les mineurs, des images affichées sur le tube cathodique.

13. Système de commande de visualisation d'images de télévision selon l'une quelconque des revendications précédentes, dans lequel lesdits moyens de distorsion instantanée (13) comprennent des moyens de modification de la focalisation du tube cathodique, servant à modifier la tension de focalisation des trois canaux du tube cathodique.

14. Système de commande de visualisation d'images de télévision selon l'une quelconque des revendications précédentes, **caractérisé en ce qu'**il comprend des moyens pour afficher des symboles sur l'écran de sorte que pendant les conditions de suppression ou de distorsion vidéo des symboles correspondants indiquant la suppression vidéo ou la distorsion vidéo sont produits respectivement sur l'écran de l'appareil de télévision (1).

15. Système de commande de visualisation d'images de télévision selon l'une quelconque des revendications précédentes, **caractérisé en ce qu'**il comprend une horloge interne commandée par les touches de télécommande (2) et des moyens d'affichage de programmation pour fournir la possibilité de programmer l'activation desdits moyens de suppression instantanée vidéo (12) dans des canaux désirés, à des heures désirées et pendant des périodes désirées.

16. Système de commande de visualisation d'images de télévision selon la revendication 2, **caractérisé en ce que** lesdits moyens d'entrée supplémentaires (11) comprennent une touche supplémentaire (11) pour délivrer le premier signal supplémentaire (b11) pour la suppression instantanée du signal vidéo ou du programme de télévision, ledit premier signal supplémentaire (b11) commandant un signal de sortie de commande (b8) dans l'appareil de télévision, et dans lequel les moyens (12) de suppression instantanée du signal vidéo du programme de télévision agissant lors de la réception du premier signal supplémentaire (b11) pour la suppression instantanée du signal vidéo du programme de télévision, lesdits moyens (12) de suppression instantanée du signal vidéo du programme de télévision étant commutés par l'enfoncement de la touche supplémentaire (11) entre
une condition de non fonctionnement, dans lequel la sortie de commande supplémentaire correspondante (b8) n'est pas active, et
une condition de fonctionnement respective qui réalise la suppression instantanée du signal vidéo.

17. Système de commande de visualisation d'images de télévision selon la revendication 16, **caractérisé en ce qu'**il comporte en outre une unité de traitement de télécommande (4), des transducteurs d'émission et de réception (5,6), un amplificateur de signaux de télécommande (7) et une unité de traitement de décodage de signaux (8), ladite unité de traitement de télécommande (4), lesdits transducteurs d'émission et de réception (5,6), ledit amplificateur de signaux de télécommande (7) et ladite unité de traitement de décodage de signaux (8) étant également sensibles à l'activation desdits premiers signaux supplémentaires (b11) et ladite unité de traitement de décodage de signaux de télécommande (8) comprenant les premières sorties de commande supplémentaires (b8).

18. Système de commande de visualisation d'images de télévision selon la revendication 2, **caractérisé en ce que** lesdits moyens d'entrée supplémentaires (11) comprennent une touche supplémentaire (11) servant à délivrer un second signal supplémentaire (c11) servant à la distorsion instantanée du signal vidéo du programme de télévision, ledit second signal supplémentaire (c11) commandant un signal de commande (c8) dans l'appareil de télévision, et dans lequel les moyens (13) de distorsion instantanée du signal vidéo de programme de télévision agissant lors de la réception du signal supplémentaire (c11) pour la distorsion instantanée du signal vidéo du programme de télévision, lesdits moyens (13) de distorsion instantanée du signal vidéo du programme de télévision étant commutés par l'enfoncement de la touche supplémentaire (11), entre
une condition de non-fonctionnement, dans lequel la sortie de commande supplémentaire correspondante (c8) n'est pas active, et
une condition de fonctionnement respective, qui produit la distorsion instantanée du signal vidéo.
